**Europäisches Patentamt**

**European Patent Office**

**Office européen des brevets**

(11) Numéro de publication: **0 039 264**
**B1**

(12) **FASCICULE DE BREVET EUROPEEN**

(45) Date de publication du fascicule du brevet:
14.03.84

(21) Numéro de dépôt: **81400549.2**

(22) Date de dépôt: **06.04.81**

(51) Int. Cl.³: **D 04 H 3/07** // B29D3/02

(54) **Procédé et machine pour la fabrication de pièces de révolution à partir de fils.**

(30) Priorité: **11.04.80 FR 8008178**

(43) Date de publication de la demande:
**04.11.81 Bulletin 81/44**

(45) Mention de la délivrance du brevet:
**14.03.84 Bulletin 84/11**

(84) Etats contractants désignés:
**BE CH DE GB IT LI NL SE**

(56) Documents cités:
**FR - A - 1 460 058**
**FR - A - 2 315 562**
**FR - A - 2 408 676**

(73) Titulaire: **COMMISSARIAT A L'ENERGIE ATOMIQUE**
**Etablissement de Caractère Scientifique Technique et**
**Industriel, B.P. 510, F-75752 Paris Cedex 15 (FR)**

(72) Inventeur: **Bompard, Bruno, 23, rue de Montbriliant,**
**F-69003 Lyon (FR)**
Inventeur: **Bruyere, Aiain, 258 Les Erables La Duchère,**
**F-69009 Lyon (FR)**

(74) Mandataire: **Mongrédien, André et al, c/o**
**BREVATOME 25, rue de Ponthieu, F-75008 Paris (FR)**

BUNDESDRUCKEREI BERLIN

## Procédé et machine pour la fabrication de pièces de révolution à partir de fils

La présente invention concerne un procédé de fabrication de corps ou pièces de révolution en un matériau tridimensionnel plus particulièrement adapté pour la fabrication de pièces dont la génératrice présente au moins une partie concave, ainsi qu'une machine permettant de mettre en oeuvre industriellement ce procédé. Un tel procédé peut s'appliquer notamment à la fabrication de pièces d'isolateurs électriques en fibres de silice et résine, de pièces de sectionneurs électriques pour courants de très grandes intensités, en fibres de verre. Il peut également être utilisé dans les secteurs automobile et aéronautique, notamment pour la fabrication d'éléments de freins et d'embrayages et pour la réalisation des parois des chambres à combustion et des pistons des véhicules automobiles.

Plus précisément, l'invention a pour objet un perfectionnement au procédé de fabrication décrit et revendiqué dans la demande de brevet français FR-A-2 408 676 déposé le 23 septembre 1977 au nom du Commissariat à l'Energie Atomique. Le procédé décrit dans cette demande de brevet permet de réaliser des corps ou pièces de formes géométriques quelconques en un matériau tridimensionnel noyé dans une résine, ce matériau pouvant avoir une forte épaisseur. Le matériau constituant la pièce réalisée comprend trois séries de fils disposées selon trois direction préférentielles, éventuellement perpendiculaires, la densité des fils dans chacune des trois directions pouvant être aussi élevée que désirée et notamment parfaitement homogène selon chacune de ces trois directions. On notera que le terme »fil« utilisé dans la présente demande désigne aussi bien un fil qu'un filament, une fibre ou encore une mèche, le matériau constituant ce fil pouvant être indifféremment du graphite, du carbone, du verre, de la silice, du polyamide, du polyimide, etc. . .

Le procédé décrit dans le document FR-A-2 408 676 consiste à réaliser un mandrin support en un matériau apte à recevoir des picôts par implantation directe par pression, à implanter sur ce mandrin des rangées de picots réalisées en une matière textile fileforme prérigidifiée par imprégnation d'une résine durcissable, de façon à délimiter entre les picots des couloirs longitudinaux et circonférentiels, à disposer par tramage et par bobinage des fils longitudinaux et circonférentiels dans les couloirs ainsi définis afin de réaliser des nappes successives superposées, à imprégner de résine puis à polymériser l'ensemble ainsi obtenu, et enfin à éliminer le mandrin support.

Le document FR-A-2 408 676 décrit plus précisément un procédé et une machine permettant d'implanter les picots sur la surface du mandrin. Les opérations de bobinage et de tramage des fils longitudinaux et circonférentiels dans les couloirs définis entre les picots s'effectuent ensuite à l'aide d'une machine telle que celle qui est décrite dans le document FR-A-2 315 562 déposé le 26 juin 1975 au nom du Commissariat à l'Energie Atomique.

Par rapport aux autres procédés connus de la technique antérieure, le procédé·décrit dans le document 2 408 676 présente l'avantage de permettre l'utilisation de fils préimprégnés de résine assurant une meilleure répartition de la résine au coeur de la pièce formée. En outre, ce procédé permet d'obtenir facilement et de façon relativement peu coûteuse des pièces en matériau tridimensionnel dont la densité des fils dans chacune des trois directions peut être parfaitement contrôlée et aussi élevée que désirée.

Dans certaines conditions d'utilisation particulières, et notamment dans le cas de la fabrication de pièces de révolution dont la génératrice n'est pas rectiligne et présente une ou plusieurs parties concaves, comme cela est le cas par exemple pour les isolateurs électriques en fibres de silice, la mise en place des fils longitudinaux dans les couloirs correspondants peut présenter certaines difficultés notamment lorsque la densité des picots est très grande, c'est-à-dire lorsque la largeur des couloirs longitudinaux est particulièrement réduite. En effet, en raison de la forme concave du mandrin, les fils longitudinaux sortent sur au moins une partie de leur longueur des couloirs correspondants formés entre les picots. Si la largeur des couloirs est suffisante, les fils longitudinaux peuvent être réintroduits dans ces couloirs du bobinage de fils circonférentiels effectué ensuite. Cependant, cette opération est délicate et complique la fabrication. En outre, lorsque la largeur des couloirs longitudinaux est plus faible, la réintroduction des fils correspondants dans ces couloirs devient pratiquement impossible.

Par ailleurs, on connaît du brevet FR-A-1 460 058 une machine servant à bobiner des filaments sur un mandrin, dans laquelle des moyens sont prévus pour réguler le pas d'enroulement des filaments selon la forme du mandrin.

L'invention a pour objet un procédé de fabrication de pièces de révolution tridimensionnelle constituant un perfectionnement au procédé décrit et revendiqué dans le document FR-A-2 408 676 et permettant notamment de réaliser des pièces de révolution dont la génératrice présente au moins une partie concave, quelle que soit la densité des picots recouvrant le mandrin. En outre, bien que l'invention soit particulièrement adaptée à la fabrication de pièces tridimensionnelles à partir d'un mandrin sur lequel des picots ont été implantés par pression comme l'enseigne la demande de brevet français FR-A-2 408 676, elle n'est pas limitée à ce type d'obtention d'un brevet muni de picots. En effet, l'invention s'applique également au cas où les picots sont réalisés directement sur le mandrin par usinage de celui-ci. Cependant, cette dernière technique présente différents inconvénients tels que le coût et la durée de l'usinage, la limitation qu'elle implique dans la densité des picots et les risques de délaminage qu'elle entraîne. En conséquence, on choisira de préférence la technique d'implantation des picots par pression, ou une technique équivalente, dans le cadre de la présente invention.

Conformément à l'invention, il est donc proposé un procédé de fabrication de pièces de révolution en matériau tridimensionnel dont la génératrice présente au moins une partie concave, ce procédé consistant à réaliser un mandrin support, muni de rangées de picots définissant entre elles des couloirs longitudinaux et des couloirs circonférentiels, à disposer par bobinage et par tramage des nappes de fils superposées dans lesdits couloirs, à densifier l'ensemble ainsi obtenu et enfin, à éliminer le mandrin support, ce procédé étant caractérisé en ce qu'on dépose les fils longitudinaux à l'intérieur des couloirs correspondants et en ce qu'on maintient ces fils dans les couloirs au niveau de ladite partie concave, au fur et à mesure de leur dépôt, en enroulant au moins un fil dans l'un des couloirs circonférentiels situés au niveau de ladite partie concave, à l'aide d'un dispositif de maintien mobile de manière indépendante sensiblement selon une direction tangentielle à ce couloir circonférentiel.

De préférence, on maintient provisoirement au moyen d'un organe rétractable le fil longitudinal que l'on dispose dans l'un des couloirs longitudinaux avant de le maintenir en enroulant ledit fil dans le couloir circonférentiel correspondant.

Selon une autre caractéristique de l'invention, il est proposé de réaliser les rangées de picots en effectuant des perforations sur le mandrin aux endroits destinés à recevoir des picots, puis en mettant en place les picots dans ces perforations. Cette technique permet d'assurer un positionnement des picots pratiquement sans défaut.

L'invention concerne également une machine pour la fabrication de pièces de révolution en matériau tridimensionnel dont la génératrice présente au moins une partie concave.

Conformément à l'invention, cette machine comprend des moyens pour supporter en rotation un mandrin muni de ranngées de picots définissant entre elles des couloirs longitudinaux et des couloirs circonférentiels, des moyen de bobinage et des moyens de tramage aptes à déposer dans lesdits couloirs des couches de fils superposés, cette machine étant caractérisée en ce qu'elle comprend de plus, au moins un dispositif de maintien des fils longitudinaux disposé au niveau de ladite partie concave et prévu pour venir appliquer le fil longitudinal dans le fond de la partie concave lorsque ce fil est déposé à l'intérieur d'un couloir longitudinal par les moyens de tramage, et pour maintenir dans cette position les fils longitudinaux déposés au préalable dans les autres couloirs longitudinaux.

Selon une autre caractéristique de l'invention, le dispositif de maintien des fils de trame comprend un organe rétractable assurant le maintien du fil longitudinal dans le couloir correspondant après le passage des moyens de tramage, et un système de bobinage déposant au moins un fil dans l'un au moins des couloirs circonférentiels afin de maintenir les fils longitudinaux déposés au préalable par les moyens de tramage dans les autres couloirs longitudinaux.

Selon encore une autre caractéristique de l'invention, les moyens de tramage comprennent alors au moins une passette guidée de façon à se déplacer selon une génératrice du mandrin à l'intérieur d'un couloir longitudinal, des moyens étant prévus pour faire tourner le mandrin dans un sens déterminé et de façon discontinue selon égal à l'écart entre deux couloirs longitudinaux à chaque fois que la passette parvient à l'une des extrémités du mandrin, ledit organe rétractable étant mobile radialement par rapport au mandrin afin de permettre le passage de la passette et tangentiellement afin d'accompagner le mandrin dans sa rotation lorsque ledit organe assure le maintien d'un fil longitudinal dans le couloir correspondant.

Selon encore une autre caractéristique de l'invention, le système de bobinage comprend un système d'alimentation en fil et un système de guidage du fil disposè tangentiellement en retrait par rapport au couloir longitudinal dans lequel se déplace la passette et dans un couloir circonférentiel voisin de celui dans lequel est disposeé ledit organe rétractable. Le dispositif de maintien peut alors comprendre un ensemble de support associé à une partie fixe de la machine, ledit ensemble de support comportant des moyens pour déplacer radialement et tangentiellement l'organe rétractable par rapport au mandrin et portant directement le systéme de guidage du fil. De préférence, l'ensemble de support est alors relié à la partie fixe de l'appareil par l'intermédiaire de moyens de réglage permettant d'assurer le positionnement radial et tangential de l'organe rétractable et du système de bobinage par rapport à la partie concave formée sur le mandrin avant la mise en oeuvre des moyens de tramage.

On décrira maintenant, à titre d'exemple non limitatif, un mode de réalisation particulier de l'invention en se référant aux dessins annexés dans lesquels:

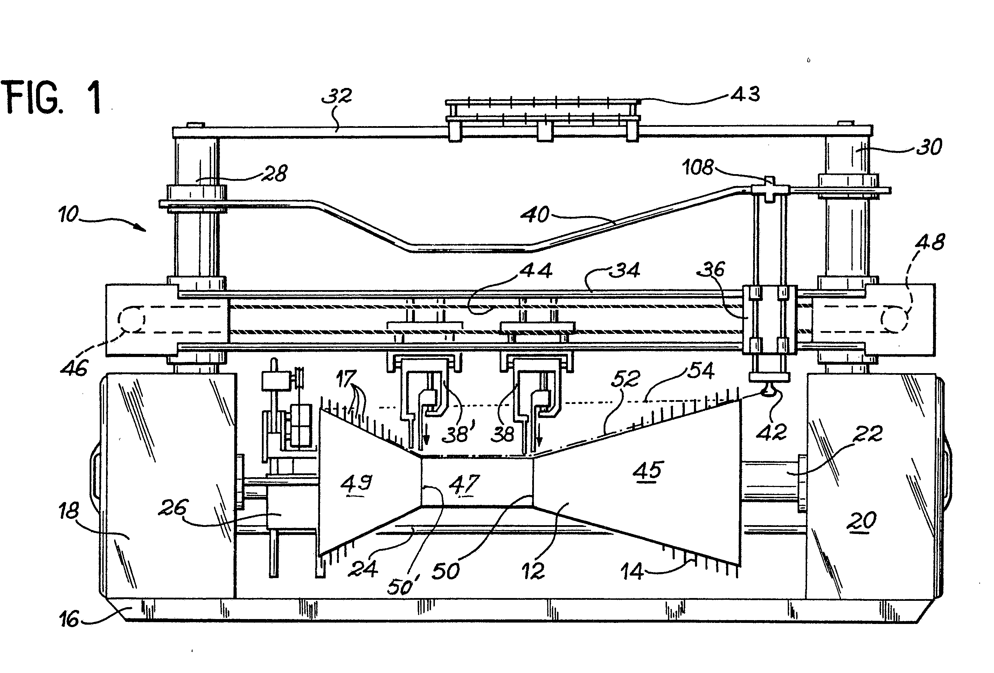

— la figure 1 est une vue de face d'une machine destinée à réaliser le bobinage et le tramage de couches de fils superposées dans des couloirs définis entre des picots portés par un mandrin, afin de fabriquer des pièces de révolution telles que des isolateurs électriques, cette machine étant réalisée conformément aux enseignements de la présente invention,

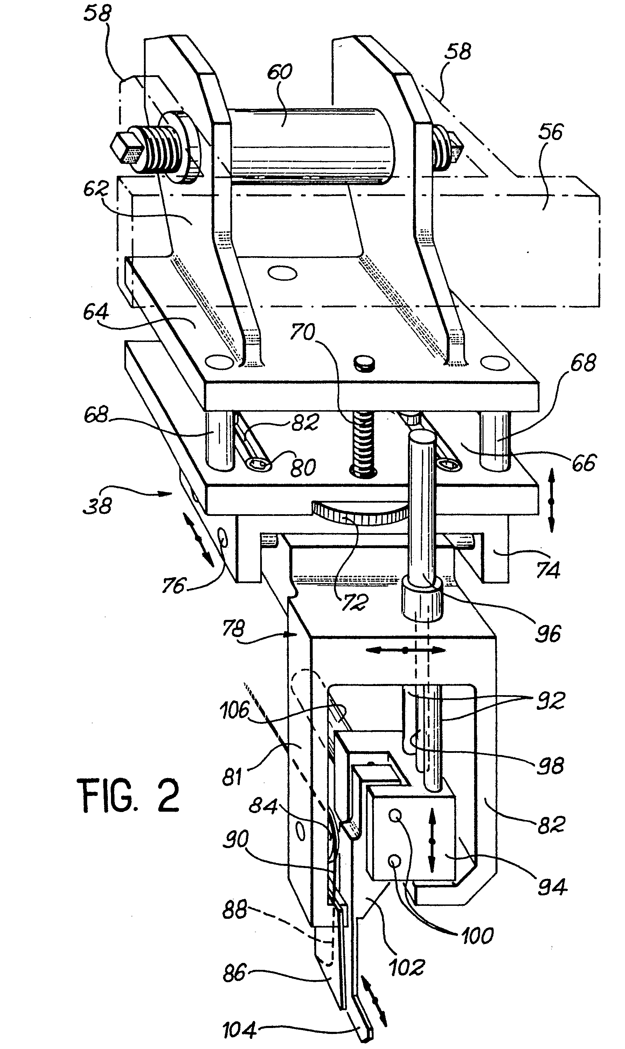

— la figure 2 est une vue en perspective, à plus grande échelle, qui représente un dispositif destiné à maintenir dans les couloirs correspondants les fils longitudinaux déposés par les moyens de tramage de la machine représentée sur la figure 1, lorsque la génératrice de la pièce à réaliser présente au moins une partie concave et,

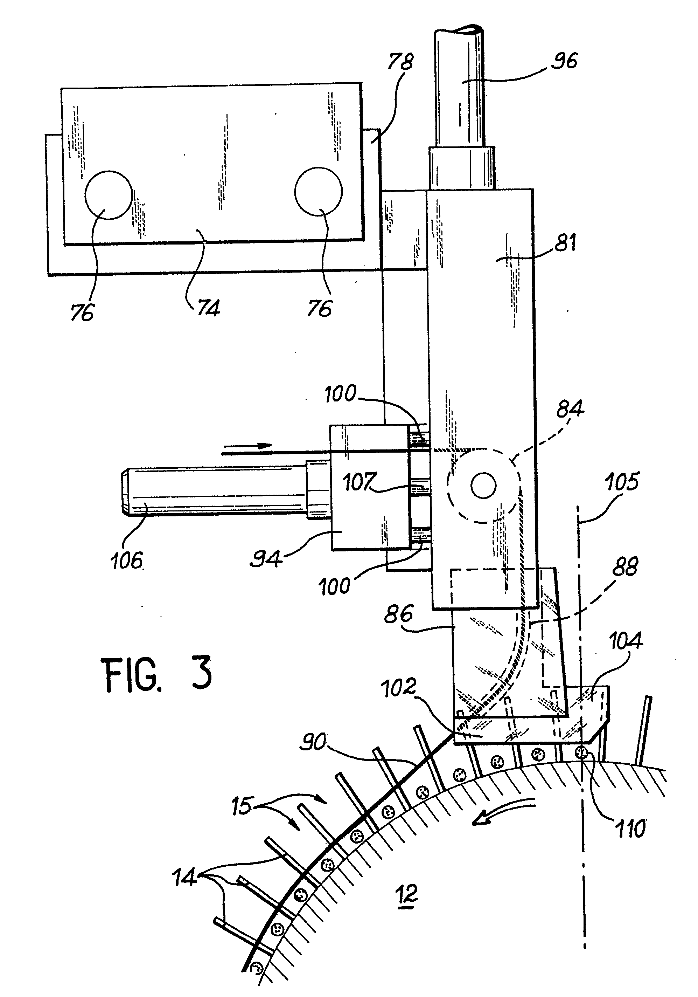

— la figure 3 est une vue en bout, schématique, illustrant le fonctionnement du dispositif de maintien représenté sur la figure 2.

La machine 10 représentée sur la figure 1 est particulièrement adaptée pour réaliser des pièces de révolution présentant une génératrice concave, telles que, par exemple, des isolateurs électriques. Plus précisément, la machine 10 est destinée à réaliser par bobinage et par tramage des couches superposées de fils longitudinaux et transversaux sur un mandrin 12 portant des rangées de picots 14 définissant des couloirs longitudinaux et circonférentiels.

Avant que le mandrin 12 ne soit monté sur la machine 10, les picots 14 peuvent être réalisés sur le mandrin directement par usinage de celui-ci. Cependant, pour des raisons déjà évoquées, ils sont de préférence implantés sur le mandrin par pression. Cette implantation peut se faire, par exemple, à l'aide d'une machine telle que celle qui est décrite dans le document FR-A-2 408 676. Pour les conditions de cette implantation et la structure particulière de la machine, on se reportera utilement au texte de cette demande de brevet. On remarquera simplement ici que les picots sont implantés de préférence selon une direction radiale par rapport à l'axe du mandrin, mais qu'ils peuvent également être inclinés par rapport à cette direction. En outre, les picots sont constitués de préférence par des fils de longueur et de diamètre déterminés, rigidifiés par une imprégnation préalable d'une résine thermodurcissable. De plus, le matériau constituant le mandrin est choisi pour permettre à la fois l'implantation directe des picots par simple pression et le maintien de ces picots après implantation. Ce matériau doit également résister aux traitements thermiques ultérieurs, présenter une texture suffisamment rigide et indéformable pour maintenir le corps tridimensionnel qui l'entoure et pouvoir être facilement détruit après polymérisation de l'ensemble. A cet effet, on utilise de préférence des mousses rigides telles que des mousses à base de polyuréthane ou des mousses phénoliques. On peut aussi dans une variante, usiner directement les picots sur le mandrin.

Conformément à l'invention, la qualité de l'implantation des picots peut être sensiblement améliorée en utilisant une technique équivalente à la technique décrite dans le document FR-A-2 408 676 qui consiste à réaliser d'abord des perforations dans le mandrin aux emplacements prévus pour recevoir les picots, puis à implanter les picots dans ces perforations, sans qu'il soit nécessaire d'appliquer une pression.

Le mandrin 12 garni de picots 14 obtenu par exemple au moyen de ces procédés se caractérise par le fait que les picots 14 sont implantés sous forme de rangées longitudinales et circonférentielles qui définissent entre elles des couloirs longitudinaux 15 (figure 3) et des couloirs circonférentiels 17 (figure 1). Les couloirs circonférentiels peuvent être constitués soit par des couloirs parallèles juxtaposés, soit par un couloir hélicoïdal unique, selon l'implantation des picots.

Comme on le voit sur la figure 1, la machine 10 comprend un châssis 16 portant à ses extrémités des consoles gauche et droite 18 et 20 qui font saillie vers le haut à partir du châssis 16. Les consoles 18 et 20 supportent un arbre horizontal 22 sur lequel est monté le mandrin 12. L'arbre 22 est entraîné en rotation par des moyens (non représentés) constitués, par exemple, par un moteur électrique relié à l'arbre 22 par un système de transmission tel qu'un système de poulies et de courroies. La rotation de l'arbre 22 et du mandrin 12 doit intervenir de façon discontinue et selon un pas déterminé correspondant à la distance séparant les couloirs longitudinaux 15 formés entre les picots 14. A cet effet, le moteur électrique d'entraînement de l'arbre 22 sera commandé de préférence par un système de commutation électrique classique (non représenté) assurant le fonctionnement de l'ensemble de la machine.

Les consoles 18 et 20 portent également une ou plusieurs traverses 24, horizontales et parallèles à l'axe de l'arbre 22, sur lesquelles se déplace un sous-ensemble de bobinage 26. Le sous-ensemble 26 comprend une ou plusieurs bobines d'alimentation en fil, une passette déposant le ou les fils dans les couloirs de bobinage 17 formés sur le mandrin 12, et des moyens de tension de ces fils. Le déplacement du sous-ensemble de bobinage le long de la traverse 24 peut être commandé par tout moyen, et notamment par une vis fin de pas approprié.

Chacune des consoles 18 et 20 porte à sa partie supérieure une colonne verticale 28, 30 respectivement. Les colonnes 28 et 30 sont reliées à leur partie supérieure par une poutre 32 et elles supportent une traverse 34, horizontale et parallèle à l'axe de l'arbre 22. La traverse 34 supporte un sous-ensemble de tramage 36 ainsi que deux sous-ensembles ou dispositifs de maintien du fil de trame 38, 38' dont l'un est représenté en perspective et à plus grande échelle sur la figure 2. Les colonnes 28 et 30 supportent également un rail 40 disposé entre la traverse 34 et la poutre 32 et s'étendant parallèlement à la génératrice supérieure du mandrin 12 située dans le plan vertical passant par son axe. Le sous-ensemble de tramage 36 comprend un système de guidage 108 qui suit le rail 40 et ce système de guidage 108 est relié rigidement à une passette de tramage 42.

Ainsi, le déplacement du sous-ensemble de tramage 36 le long de la traverse 34 commande le déplacement de la passette 42 dans le couloir de tramage supérieur 14, selon la ligne 52 de la figure 1. Le sous-ensemble de tramage 36 est alimenté en fil à partir d'une ou plusieurs bobines (non représentées) au travers d'un système de tension 43 porté par la poutre 32. Le mouvement de va-et-vient du sous-ensemble 36 le long de la traverse 34 peut être commandé par tout moyen connu tel que, par exemple, un moteur électrique (non représenté) déplaçant alternativement une courroie ou chaîne 44 dans l'une ou l'autre direction autour de deux poulies ou engrenages 46, 48 disposés à chacune des extrémités de la traverse 34.

Afin de mieux comprendre la structure et le fonctionnement des sous-ensembles de bobinage 26 et de tramage 36 de la machine 10, on se reportera utilement au texte du brevet français n° 2 315 562 qui décrit en détail un mode de réalisation particulier d'une machine de bobinage et de tramage comparable à la machine selon la présente invention. Le procédé de fabrication d'une pièce tridimensionnelle décrit dans ce brevet français se distingue du procédé selon la présente invention par le fait que le bobinage et le tramage s'effectuent sur un mandrin non muni de picots, les couches de fils ainsi constituées étant ensuite cousues au moyen d'un dispositif approprié. En outre, aucun dispositif comparable au sous-ensemble de maintien 38 n'est décrit dans ce brevet.

Comme le montre la figure 1, l'invention a trait plus précisément à la fabrication de pièces de révolution en matériau tridimensionnel dont la génératrice présente au moins une partie concave. Ainsi, dans l'exemple représenté, la pièce à réaliser est un isolateur électrique qui comprend deux parties tronconiques 45 et 49 dont les génératrices rectilignes sont inclinées en sens inverse par rapport à l'axe du mandrin, et une partie cylindrique 47 disposée entre les extrémités de plus petit diamètre des parties tronconiques 45 et 49, de telle sorte que ces trois parties 45, 47 et 49 mises bout à bout définissent une surface externe concave. La génératrice du mandrin 12 est donc concave et présente deux points singuliers 50 et 50' en face desquels sont disposés les dispositifs de maintien 38 et 38' respectivement.

Lors de la réalisation d'une couche de fils de trame sur le mandrin 12, la passette 42 est guidée par la coopération du système de guidage 108 avec le rail 40 le long de la ligne 52 parallèle à la génératrice supérieure du mandrin 12, à l'intérieur d'un couloir de tramage 15 défini entre les picots 14.

En raison de la forme concave de la surface externe du mandrin 12, le ou les fils de trame ainsi déposés dans l'un des couloirs longitudinaux 15 définis entre les picots 14 a alors tendance à s'échapper de ce couloir pour prendre la forme rectiligne représentée en 54 sur la figure 1. Lorsque la densité circonférentielle des picots 14 n'est pas très importante, c'est-à-dire lorsque la largeur des couloirs de tramage est relativement grande, les fils de trame disposés selon la ligne 54 reprendront assez facilement leur place à l'intérieur des couloirs longitudinaux 15 lorsque la couche de fils suivante sera bobinée au moyen du sous-ensemble 26 dans les couloirs circonférentiels 17. Cependant, lorsque la densité circonférentielle des picots 14 devient très importante, c'est-à-dire lorsque la largeur des couloirs longitudinaux 15 se réduit, la remise en place des fils de trame à l'intérieur de ces couloirs longitudinaux devient pratiquement impossible.

Conformément à l'invention, cet inconvénient des machines antérieures est évité au moyen des dispositifs de maintien 38 et 38'. On décrica maintenant en détail le dispositif 38 en se référant à la figure 2, sachant que le dispositif 38' est identique à ce dispositif 38.

Comme l'illustre la figure 2, le dispositif de maintien 38 comprend un support de bâti 56 monté fixement sur la traverse 34, par exemple à l'aide de boulons (non représentés). Le support 56 comprend deux bras 58 supportant de façon pivotante, par l'intermédiaire d'un axe 60, un bâti articulé 62 comprenant une plaque 64 prévue pour être disposée dans un plan sensiblement horizontal. Le bâti 62 est normalement maintenu dans cette position par un doigt de blocage (non représenté) porté par l'un des bras 58 et pénétrant dans un trou correspondant formé dans le bâti 62. Une plaque 66 est disposée parallèment à la plaque 64 en-dessous de celle-ci. La plaque 66 est reliée à la plaque 64 à la fois par des colonnes de guidage 68 et par une vis de réglage 70 permettant d'ajuster au moyen d'une molette 72 la distance séparant les plaques 64 et 66. La plaque inférieure 66 porte un support 74 muni de deux barres 76 d'axes parallèles à l'axe 60 et disposées normalement dans un même plan horizontal. Un ensemble de support 78 est suspendu aux barres 76. L'ensemble 78 et le support 74 sont susceptibles de se déplacer dans un plan horizontal perpendiculairement à l'axe 60 par suite de la coopération de vis 80, ou analogues, fixées au support 74, avec des rainures 82 formées dans la plaque 66. Le serrage et le desserrage des vis 80 permettant le déplacement de l'ensemble de support 78 et du support 74 dans une direction perpendiculaire à l'axe 60 peut être effectué soit en introduisant une clé entre les plaques 64 et 66, soit au travers d'ouvertures (non représentées) formées dans la plaque supérieure 64. L'ensemble de support 78 comprend deux bras verticaux 81 et 82 qui font saillie vers le bas au-dessus du mandrin 12. Le bras gauche 81, en considérant la figure 2, porte une poulie 84 disposée verticalement au-dessus d'une passette 86 dans laquelle est monté un guide 88 prévu pour déposer un fil 90 dans l'un des couloirs de bobinage formés entre les picots 14 sur le mandrin 12, comme on le verra par la suite. Le fil 90 provient d'une bobine d'alimentation (non représentee).

Le bras de droite 82 est replié vers le bras 81, à son extrémité inférieure, pour supporter par l'intermédiaire de deux colonnes verticales 92 une tête 94 susceptible de coulisser verticalement le long des colonnes 92 sous l'action d'un vérin 96 porté par l'ensemble de support 78. La tige 98 du vérin 96 est disposée entre les colonnes 92. La tête coulissante 94 supporte elle-même, par l'intermédiaire de deux colonnes horizontales 100, une plaquette abaisse-fils 102 dont l'extrémité de largeur réduite est susceptible de pénétrer dans l'un des couloirs circonférentiels 17.

Comme l'illustre en particulier la figure 3, l'extrémité inférieure de la plaquette 102 comporte un prolongement horizontal 104 disposé sensiblement à angle droit par rapport au reste de la plaquette et venant normalement se placer dans le plan vertical 105 passant par l'axe du mandrin 12. La plaquette 102 est susceptible de se déplacer le long des colonnes horizontales 100 sous l'action d'un vérin 106 solidaire de la tête 94 et dont la tige 107 est disposée entre les colonnes 100.

Comme l'illustre en particulier la figure 1, les dispositifs 38 et 38' sont disposés sur la traverse 34 de telle sorte que la plaquette abaisse-fils 102 et la passette 86 de chacun de ces dispositifs se trouvent à proximité immédiate des points singuliers 50 et 50' formés à la surface externe du mandrin 12. Bien entendu, si la surface externe du mandrin 12 ne présentait qu'un point singulier, seul un dispositif du type du dispositif 38 serait nécessaire. Au contraire, dans le cas où la surface externe du mandrin 12 est une surface courbe ou une surface présentant plus de deux parties concaves, il peut être nécaissaire de disposer sur la traverse 34 au moins trois dispositifs comparables au dispositif 38 en des points judicieusement choisis de manière à éviter qu'à aucun moment le fil de trame déposé par la passette 42 ne s'échappe des couloirs longitudinaux 15 définis entre les picots 14. La passette 86 et la plaquette abaisse-fils 102 de chaque dispositif 38 sont également positionnées en hauteur et en profondeur par rapport au mandrin 12 à l'aide des moyens de réglage que constituent la molette 72 les vis 80. Ce positionnement est tel que l'illustre la figure 3, c'est-à-dire que la passette 86 et la plaquette 102 pénètrent dans deux couloirs circonférentiels 17 voisins et que la passette 86 est légèrement en retrait par rapport au plan vertical 105, pour permettre le passage de la passette de tramage 42 (figure 1), alors que la plaquette chevauche le couloir longitudinal supérieur 15 parcouru par la passette 42 dans une position du vérin 106 et dégage ce couloir dans l'autre position de ce vérin.

Lors de la réalisation d'une couche de fils longitudinaux sur le mandrin 12 représenté sur la figure 1, le fonctionnement de la machine 10 est le suivant.

Avant le début du tramage, le positionnement du mandrin 12 par rapport aux différents organes de la machine 10 est réalise avec précision de telle sorte qu'un couloir longitudinal de tramage 15 se trouve disposé dans le plan vertical passant par l'axe du mandrin. Lorsque la passette 42 n'est pas encore engagée dans ce couloir de tramage, comme l'illustre la figure 1, la plaquette 102 se trouve en position levée et en retrait par rapport au plan vertical passant par l'axe du mandrin. Cette position est opposée à celle qui est représentée sur les figures 2 et 3. Le tramage s'effectue en déplaçant le sous-ensemble 36 le long de la traverse 34 alternativement de gauche à droite et de droite à gauche sous l'action d'un moteur électrique (non représenté) et d'un d'entraînement tel que la courroie ou que la chaîne 44. Au cours du déplacement du sous-ensemble 36 le long de la traverse 34, la passette 42 se déplace selon la ligne 52 dans le couloir de tramage 15 disposé verticalement à la partie supérieure du mandrin 12, par suite de la coopération du rail 40 avec le système de guidage 108.

Selon l'invention, dès que la passette 42 a dépassé légèrement le dispositif de maintien 38 pour déposer dans le couloir correspondant un fil de trame selon la ligne 52, le dispositif 38 se met en oeuvre, c'est-à-dire que la partie 104 de la plaquette abaisse-fils 102 vient se placer au-dessus du couloir de tramage supérieur 15 sous l'action du vérin 106 et s'abaisse avec la tête coulissante 94 sous l'action du vérin 96. Ainsi, la partie 104 vient maintenir le fil de trame 110 dès que celui-ci a été déposé par la passette 42, pour empêcher que ce fil ne s'échappe du couloir correspondant. Le dispositif 38' se met en oeuvre de la même manière lorsque la passette 42 dépasse ce dispositif.

Les dispositifs 38 et 38' restent dans cette position jusqu'à ce que la passette 42 atteigne l'autre extrémité du mandrin 12. A ce moment, sous l'impulsion d'un moteur électrique (non représenté), le mandrin pivote avec l'arbre 22 selon un angle tel que la passette 42 se trouve en vis-à-vis du couloir de tramage 15 juxtaposé au couloir dans lequel alle vient de déposer un fil. Simultanément à ce mouvement de rotation du mandrin 12, la plaquette abaisse-fils 102 de chaque dispositif 38, 38' recule sous l'impulsion du vérin 106 correspondant. Ce mouvement simultané du mandrin 12 et des plaquettes 102 a pour effet de réduire le frottement entre le fil de trame que vient de déposer la passette 42 et les extrémités 104 des plaquettes. Le mouvement de rotation du mandrin 12 a également pour conséquence de dérouler le fil 90 sur une longueur correspondant à l'écart entre deux couloirs de tramage 15 voisins.

Comme le montre en particulier la figure 3, la disposition relative de la passette gouvernail 86 et de la plaquette 102 de chacun des dispositifs 38 et 38' est telle que les fils de trame déposés au préalable par la passette 42 dans les couloirs longitudinaux 15 commencent à être maintenus par les fils 90 dès qu'ils arrivent au niveau de la partie arrière de la plaquette abaisse-fils 102 correspondante, lorsque celle-ci est dans sa position la plus avancée.

Au début de la réalisation d'une nouvelle couche de fils longitudinaux au moyen du sous-ensemble de tramage 36, l'extrémité libre de chacun des fils 90 est fixée au mandrin 12 par tout moyen approprié, par exemple en l'accrochant à l'un des picots 14. Le fonctionnement simultané du sous-ensemble de tramage 36 et des dispositifs de maintien 38 et 38' s'effectue ainsi en continu jusqu'à ce que la totalité des couloirs de tramage soit garnie d'un ou plusieurs fils au moyen de la passette 42. A ce moment, les fils 90 sont coupés et leur seconde extrémité

peut également fixée à l'un des picots 14 de façon à maintenir définitivement la couche de fils longitudinaux ainsi formée. On notera que la commande synchronisée des différentes parties de la machine selon l'invention peut être faite au moyen d'un système électronique de type connu commandé par des contacteurs disposés judicieusement. Un tel système ne fait pas partie de l'invention et ne sera pas décrit ici en détail.

Une couche de fils circonférentiels peut ensuite être réalisée au moyen du sous-ensemble de bobinage 26 d'une manière comparable à celle qui est décrite dans le document FR-A-2 315 562. Un grand nombre de couches superposées de fils longitudinaux et circonférentiels peut ainsi être disposé autour du mandrin 12 afin de réaliser une pièce de l'épaisseur souhaitée. De façon connue, lorsque le nombre de couches désiré a été réalisé sur la machine 10, le mandrin 12 recouvert de ces différentes couches de fils est démonté et l'ensemble subit une imprégnation par une résine thermodurcissable, puis une polymérisation de cette résine. Le mandrin est ensuite éliminé, généralement par un usinage à la fraise ou à la meule selon l'axe de celui-ci, de manière à ne laisser subsister que le corps creux en matériau tridimensionnel. On peut ainsi obtenir des pièces d'isolateurs électriques ou de sectionneurs pour courants de très grande intensité, ainsi que des éléments de freins de véhicules automobiles ou d'avions de types particuliers. Les parois des chambres de combustion et des pistons des véhicules automobiles peuvent également être réalisées selon ce procédé.

De préférence, le ou les fils circonférentiels et longitudinaux disposés sur le mandrin 12 par la passette de bobinage (non représentée) et par la passette de tramage 42 sont constitués par des fils, des filaments, des fibres ou des mèches réalisés en graphite, en carbone, en silice ou en verre. Les fils selon les trois directions peuvent être de même nature ou de nature différente, selon les caractéristiques de la pièce fabriquée. Dans le procédé selon l'invention, ces fils peuvent avantageusement être préimprégnés de résine thermodurcissable, ce qui permet d'améliorer sensiblement la répartition de la résine au coeur de la pièce du corps formé.

Il apparaît clairement à la lumière de la description qui précède que l'invention s'applique plus particulièrement à la réalisation de pièces creuses de révolution en tissu tridimensionnel dont la génératrice présente au moins une partie concave, et cela quelle que soit la densité des picots 14 portés par le mandrin 12. Comme on l'a vu, l'invention n'est pas limitée à la disposition de couches superposées de fils longitudinaux et circonférentiels sur un mandrin sur lequel les picots ont été implantés après perforation préalable du mandrin, mais s'applique également à la réalisation de telles couches sur un mandrin muni de picots réalisés de toute autre manière, et notamment lorsque les picots ont été directement implantés sur le mandrin par pression ou directement usinés sur le mandrin.

Les pièces ainsi obtenues par bobinages-tramages successifs sont, soit densifiées au moyen d'une résine Epoxy, Phénolique, soit traitées classiquement pour obtenir des substrats carbone/carbone.

## Revendications

1. Procédé de fabrication de pièces de révolution en matériau tridimensionnel dont la génératrice présente au moins une partie concave, ce procédé consistant à réaliser un mandrin support (12) muni de rangées de picots (14) définissant entre elles des couloirs longitudinaux (15) et des couloirs circonférentiels (17), à disposer par bobinage et par tramage des nappes de fils superposées dans lesdits couloirs, à densifier l'ensemble ainsi obtenu, et enfin, à éliminer le mandrin support, caractérisé en ce qu'on dépose les fils longitudinaux à l'intérieur des couloirs correspondants (15) et en ce qu'on maintient ces fils dans les couloirs au niveau de ladite partie concave, au fur et à mesure de leur dépôt, en enroulant au moins un fil (90) dans l'un au moins des couloirs circonférentiels (17) situés au niveau de ladite partie concave, à l'aide d'un dispositif de maintien (38) mobile de manière indépendante sensiblement selon une direction tangentielle à ce couloir circonférentiel.

2. Procédé selon la revendication 1, caractérisé en ce qu'on maintient provisoirement au moyen d'un organe rétractable (102) le fil longitudinal que l'on dispose dans l'un des couloirs longitudinaux (15), avant de le maintenir en enroulant ledit fil (90) dans ledit couloir circonférentiel correspondant.

3. Procédé selon l'une quelconque des revendications 1 et 2, caractérisé en ce qu'on réalise le mandrin muni de rangées de picots en effectuant des perforations sur le mandrin aux endroits prévus pour recevoir des picots, puis en implantant les picots dans ces perforations.

4. Machine pour la fabrication de pièces de révolution en matériau tridimensionnel dont la génératrice présente au moins une partie concave, ladite machine comprenant des moyens (22) pour supporter en rotation un mandrin (12) muni de rangées de picots (14) définissant entre elles des couloirs longitudinaux (15) et des couloirs circonférentiels (17), des moyens de bobinage (26) et des moyens de tramage (36) aptes à déposer dans lesdits couloirs (15, 17) des couches de fils superposées, cette machine étant caractérisée en ce qu'elle comprend de plus, au moins un dispositif (38) de maintien des fils longitudinaux disposé au niveau de ladite partie concave et prévu pour venir appliquer le fil longitudinal dans le fond de la partie concave lorsque ce fil est déposé à l'intérieur d'un couloir longitudinal (15) par les moyens de tramage (36), et pour maintenir dans position les fils longitudinaux déposés au préable dans les autres couloirs longitudinaux (15).

5. Machine selon la revendication 4, caractérisée en ce que le dispositif (38) de maintien des fils de trame comprend un organe rétractable (102) assurant le maintien du fil longitudinal dans le couloir (15) correspondant après le passage des moyens de tramage (36), et un système de bobinage (84, 86) déposant au moins un fil (90) dans l'un au moins des couloirs circonférentiels (17) afin de maintenir les fils longitudinaux déposés au préalable par les moyens de tramage (36) dans les autres couloirs longitudinaux (15).

6. Machine selon la revendication 5, caractérisée en ce que les moyens de tramage (36) comprennent au moins une passette (42) guidée de façon à se déplacer selon une génératrice (52) du mandrin (12) à l'intérieur d'un couloir longitudinal (15), des moyens étant prévus pour faire tourner le mandrin (12) dans un sens déterminé et de façon discontinue selon un pas égal à l'écart entre deux couloirs longitudinaux (15) à chaque fois que la passette (42) parvient à l'une des extrémités du mandrin (12), ledit organe rétractable (102) étant mobile radialement par rapport au mandrin (12) afin de permettre le passage de la passette (42) et tangentiellement afin d'accompagner le mandrin (12) dans sa rotation lorsque ledit organe (102) assure le maintien d'un fil longitudinal dans le couloir correspondant.

7. Machine selon la revendication 6, caractérisée en ce que le système de bobinage (84, 86) comprend un système d'alimentation en fil et un système de guidage du fil (86, 88) disposé tangentiellement en retrait par rapport au couloir longitudinal (15) dans lequel se déplace la passette (42) et dans un couloir circonférentiel (17) voisin de celui dans lequel est disposé ledit organe rétractable (102).

8. Machine selon la revendication 7, caractérisée en ce que le dispositif de maintien (38) comprend un ensemble de support (56, 62, 66, 74) associé à une partie fixe (34) de la machine, ledit ensemble de support comportant des moyens (96, 106) pour déplacer radialement et tangentiellement ledit organe rétractable par rapport au mandrin et portant directement le système de guidage du fil (86, 88).

9. Machine selon la revendication 8, caractérisée en ce que l'ensemble de support (56, 62, 66, 74) est relié à la partie fixe (34) de l'appareil par l'intermédiaire de moyens de réglage (70, 72, 80, 82) permettant d'assurer le positionnement radial et tangential de l'organe rétractable (102) et du système de bobinage (84, 86) par rapport à la partie concave formée sur le mandrin (12) avant la mise en oeuvre des moyens de tramage (36).

**Patentansprüche**

1. Verfahren zum Herstellen von Rotationskörpern, deren Erzeugende wenigstens einen konkaven Bereich aufweist, aus einem dreidimensionalen Material, bei welchem ein Tragdorn (12) mit Reihen von Stacheln (14) versehen wird, welche zwischen sich in Längsrichtung verlaufende Kanäle (15) und in Umfangsrichtung verlaufende Kanäle (17) begrenzen, übereinanderliegende Schichten von Fäden durch Aufwickeln und Einlegen in die Kanäle eingebracht werden, die auf diese Weise erhaltene Anordnung verdichtet wird und schließlich der Tragdorn entfernt wird, dadurch gekennzeichnet, daß man die in Längsrichtung verlaufenden Fäden in die entsprechenden Kanäle (15) einlegt und daß man diese Fäden mit dem Einlegen derselben fortschreitend innerhalb des konkaven Bereichs in den entsprechenden Kanälen festlegt, indem man mit Hilfe einer unabhängig in einer zu einem in Umfangsrichtung verlaufenden Kanal im wesentlichen tangentialen Richtung bewegbaren Festlegeeinrichtung wenigstens einen Faden (90) in wenigstens einen innerhalb des konkaven Bereichs liegenden, in Umfangsrichtung verlaufenden Kanal (17) einwickelt.

2. Verfahren nach Anspruch 1, dadurch gekennzeichnet, daß man den in einen der in Längsrichtung verlaufenden Kanäle (15) eingelegten Faden provosorisch mittels eines zurückziehbaren Glieds (102) festhält, bevor man ihn durch Einwickeln des genannten Fadens (90) in den entsprechenden, in Umfangsrichtung verlaufenden Kanal festlegt.

3. Verfahren nach einem der Ansprüche 1 und 2, dadurch gekennzeichnet, daß man den Tragdorn mit den Reihen von Stacheln versieht, indem man den Dorn an den für die Aufnahme von Stacheln vorgesehenen Stellen mit Bohrungen versieht und die Stacheln dann in die Bohrungen einsetzt.

4. Maschine zum Herstellen von Rotationskörpern, deren Erzeugende wenigstens einen konkaven Bereich aufweist, aus einem dreidimensionalen Material, mit Einrichtungen (22) für die drehbare Lagerung eines Dorns (12) welcher mit Reihen von zwischen sich in Längsrichtung verlaufende Kanäle (15) und in Umfangsrichtung verlaufende Kanäle (17) begrenzenden Stacheln (14) besetzt ist, einer Aufwickeleinrichtung (26) und einer Einlegeeinrichtung (36) zum Einbringen von übereinanderliegenden Fadenlagen in die genannten Kanäle (15, 17), dadurch gekennzeichnet, daß sie ferner wenigstens eine Einrichtung (38) zum Festlegen der in Längsrichtung eingelegten Fäden in dem konkaven Bereich aufweist, welche zum Festhalten des in Längsrichtung eingelegten Fadens am Boden des konkaven Bereichs kurz nach dem Einlegen desselben in einen in Längsrichtung verlaufenden Kanal (15) durch die einen in Längsrichtung verlaufenden Kanal (15) durch die Einlegeeinrichtung (36) und zum Festlegen von zuvor in andere in Längsrichtung verlaufende Kanäle (15) eingelegten Längsfäden in dieser Stellung eingerichtet ist.

5. Maschine nach Anspruch 4, dadurch gekennzeichnet, daß die Einrichtung (38) zum Festlegen der Längsfäden ein zurückziehbares Glied (102) zum Festhalten eines Längsfadens in dem zugeordneten in Längsrichtung verlaufenden Kanal (15) nach dem Durchgang der Einlegeeinrichtung (36) sowie eine Wickeleinrichtung (84, 86) aufweist, mittels welcher wenigstens ein Faden (90) in wenigstens einen der in Umfangsrichtung verlaufenden Kanäle (17) einbringbar ist, um die zuvor durch die Einlegeeinrichtung (36) in die anderen in Längsrichtung verlaufenden Kanäle (15) eingelegten Längsfäden festzulegen.

6. Maschine nach Anspruch 5, dadurch gekennzeichnet, daß die Einlegeeinrichtung (36) wenigstens eine Einziehnadel (42) aufweist, welche unter Führung entlang einer Erzeugenden (52) des Dorns (12) in einem in Längsrichtung verlaufenden Kanal (15) entlang bewegbar ist, und daß Einrichtungen vorhanden sind, mittels welcher der Dorn jeweils nach Ankunft der Einziehnadel (42) an einem Ende des Dorns (12) diskontinuierlich jeweils um den Abstand zwischen zwei in Längsrichtung verlaufenden Kanälen fortdrehbar ist, wobei das zurückziehbare Glied (102) in bezug auf den Dorn (12) radial bewegbar ist, um den Durchgang der Einziehnadel (42) zu gestatten, und während des Feststellens eines Längsfadens in dem jeweiligen Kanal mit der Fortdrehung des Dorns (12) tangential bewegbar ist.

7. Maschine nach Anspruch 6, dadurch gekennzeichnet, daß die Wickeleinrichtung (84, 86) eine Fadenzufuhreinrichtung und eine Fadenführungseinrichtung (84, 86) aufweist, welche in bezug auf den in Längsrichtung verlaufenden Kanal (15), in welchem sich die Einziehnadel (42) entlangbewegt, tangential rückwärts versetzt in einem in Umfangsrichtung verlaufenden Kanal (17) angeordnet ist, welcher demjenigen, in welchem sich das zurückziehbare Glied (102) befindet, benachbart ist.

8. Maschine nach Anspruch 7, dadurch gekennzeichnet, daß die Festlegeeinrichtung (38) eine mit einem feststehenden Teil (34) der Maschine verbundene Traganordnung (56, 62, 66, 74) aufweist, welche eine Einrichtung (96, 106) zum radialen und tangentialen Bewegen des einziehbaren Glieds relativ zu dem Dorn aufweist und von welcher die Fadenführungseinrichtung (86, 88) unmittelbar getragen ist.

9. Maschine nach Anspruch 8, dadurch gekennzeichnet, daß zwischen der Traganordnung (56, 62, 66, 74) und dem feststehenden Teil (34) der Maschine Steuereinrichtungen (70, 72, 80, 82) angeordnet sind, mittels welcher das einziehbare Glied (102) und die Wickeleinrichtung (84, 85) vor Inbetriebnahme der Einlegeeinrichtung (36) in bezug auf den am Dorn (12) geformten konkaven Bereich radial und tangential ausrichtbar sind.

## Claims

1. Process for the manufacture of a body of revolution in the three-dimensional form having at least one concave portion in its generatrix, said process comprising providing a mandrel (12) having rows of pins (14) defining therebetween longitudinal corridors (15) and circumferential corridors (17), laying down layers of superimposed filaments within said corridors by unreeling and weaving, densifying the resulting assembly, and then removing the mandrel, characterized in that the longitudinal filaments are laid down incorresponding corridors (15) and in that the filaments are held in these corridors over the said concave portion as they are laid down, by winding at least one filament (90) into at least one of the circumferential corridors (17) of said concave portion, by means of a securing device (38) which is independently moveable in a direction substantially tangential to said circumferential corridor.

2. Process according to claim 1 characterized in that the longitudinal filament laid down in one of the longitudinal corridors (15) is temporarily held in place by means of a retractable member (102) before securing it by winding said filament (90) into said corresponding circumferential corridor.

3. Process according to either of claims 1 and 2 characterized in that the mandrel having rows of pins is obtained by making perforations for receiving said pins at predetermined locations in the mandrel, and then inserting the pins in the perforations.

4. Apparatus for the manufacture of a body of revolution in three-dimensional form having at least one concave portion in its generatrix, said apparatus comprising at least one means (22) for rotatably supporting a mandrel (12) having rows of pins (14) defining therebetween longitudinal corridors (15) and circumferential corridors (17), unreeling menas (26) and weaving means (36) adapted to lay down layers of superimposed filaments in said corridors (15, 17), said apparatus being characterized in that it additionally comprises at least one device (38) for securing longitudinal filaments laid down in said concave portion to hold said longitudinal filament at the bottom of the concave portion while the filament is laid within a longitudinal corridor (15) by the weaving means (36) and for holding in that portion the longitudinal filaments previously laid down in other longitudinal corridors.

5. Apparatus according to claim 4 characterized in that the device (38) for securing the filaments during weaving comprises a retractable member (102) ensuring the retention of a longitudinal filament in a corresponding corridor (15) after the passage of weaving means (36), and a reel system (84, 86) laying down at least one filament (90) into at least one of the circumferential corridors (17) to hold the longitudinal filaments previously laid down by the weaving means (36) in the other longitudinal corridors (15).

6. Apparatus according to claim 5 characterized in that the weaving means (36) comprise at least one shuttle (42) guided so as to be displaceable along a generatrix (52) of the mandrel (12) in the interior of a longitudinal corridor (15), means being provided to rotate the mandrel (12) in a predetermined sense, and discontinuously in steps equal to the distance between two longitudinal corridors (15) each time the shuttle (42) reaches one end of the mandrel (12), said retractable member (102) being moveable with respect to mandrel (12), radially to allow passage of the shuttle (42) and tangentially to accompany the mandrel in its rotation, while said member (102) is holding a longitudinal filament in a respective corridor.

7. Apparatus according to claim 6 characterized in that the reel system (84, 86) comprises a filament feed means and a filament guide means (86, 88) tangentially offset with respect to the longitudinal corridor (15) along which the shuttle (42) is moved, and located in a circumferential corridor (17) adjacent to that in which the said retractable member (15) is located.

8. Apparatus according to claim 7 characterized in that the securing device (38) comprises a support assembly (56, 62, 66, 74) associated with a fixed part (34) of the apparatus, said support assembly comprising means (96, 106) for displacing said retractable member radially and tangentially with respect to the mandrel, and carrying directly the filament guide means (86, 88).

9. Apparatus according to claim 8 characterized in that the support assembly (56, 62, 66, 74) is connected to the fixed part (34) of the apparatus through adjusting means (70, 72, 80, 82) enabling the radial and tangential positioning of the retractable member (102) and the reeling means (84, 86) with respect to the concave portion of the mandrel (12) before actuation of the weaving means (36).

# FIG. 1

0 039 264

FIG. 2

FIG. 3